Europäisches Patentamt

European Patent Office

Office européen des brevets

(11) Publication number: **0 221 696**
**A2**

## EUROPEAN PATENT APPLICATION

(21) Application number: 86307891.1

(22) Date of filing: 13.10.86

(51) Int. Cl.⁴: **C04B 35/00** , **H01B 3/12** , **H01G 4/12**

A request for correction of the specification has been filed pursuant to Rule 88 EPC. A decision on the request will be taken during the proceedings before the Examining Division (Guidelines for Examination in the EPO, A-V, 2.2).

(30) Priority: 24.10.85 GB 8526228

(43) Date of publication of application:
13.05.87 Bulletin 87/20

(84) Designated Contracting States:
BE DE FR IT NL SE

(71) Applicant: STC PLC
10, Maltravers Street
London, WC2R 3HA(GB)

(72) Inventor: Alexander, John Henry
4147A, Zia Andorra
Santa Barbara California CA93 110(US)
Inventor: Jackson, Dawn Anita
37, Knight Street Sawbridgeworth
Hertfordshire CM21 9AX(GB)

(74) Representative: Dennis, Mark Charles et al
STC Patent Department Edinburgh Way
Harlow Essex CM20 2SH(GB)

(54) **Dielectric compositions.**

(57) Dielectric compositions for ceramic capacitors which fire at low temperatures and comprise non-stoichiometric lead magnesium niobate on its own or with one or more additives, up to the 10 wt% level, selected from the group consisting of simple oxides, complex oxides and other relaxor materials. The additives serve to modify the properties of the lead magnesium niobate, typically by increasing the dielectric constant or changing the temperature coefficient of capacitance to bring it within predetermined limits, e.g. Z5U.

# DIELECTRIC COMPOSITIONS

This invention relates to dielectric compositions for use particularly, but not exclusively, in multilayer ceramic capacitors.

A multilayer ceramic capacitor basically comprises a stack consisting of a plurality of dielectric members formed of a ceramic material, with electrodes positioned between the members. The electrodes may be screenprinted onto the ceramic material, in the unfired state thereof, using conductive inks. A stack of screenprinted dielectric members is assembled, pressed together, cut into individual components, if appropriate, and fired until sintering occurs, in order to ensure non-porosity.

With the originally employed dielectrics the capacitors had to be fired at temperatures of the order of 1200-1400°C, which meant that the internal electrodes had to be of a suitable material to withstand such temperatures and that, therefore, expensive noble metals such as platinum or palladium had to be used. However, by suitable choice of the dielectric it is possible to reduce the firing temeprature thus enabling the use of internal electrodes with a high silver content (50-100% silver), which reduces the cost of materials and manufacture.

A dielectric composition which can be fired at a temperature between 950°C and 1100°C and can thus be used with high silver content electrodes is disclosed in our GB Patent Specification Serial No. 2107300B. The compositions disclosed therein comprise non-stoichiometric lead magnesium niobate (PbMg $_{1/2}$Nb$_{1/2}$O$_3$) with one or more of the following, namely lead titanate, lead stannate and lead zirconate. Some of the disclosed compositions have dielectric constants in the range 7500-10000 which makes them particularly suitable for multilayer ceramic capacitors. The originally employed employed ceramics to U.S. Coding Z5U were not compatible with high silver content electrodes and usually had dielectric constants lower than 7500-11000. One requirement of Z5U ceramics is that between 10°C and 85°C the capacitance variation should remain between the band +22% to -56% of the 25°C value. Lead magnesium niobate is a relaxor compound that is its dielectric constant decreases with increasing frequency, in other words the dielectric constant "relaxes".

According to one aspect of the present invention there is provided a dielectric composition for use in the manufacture of ceramic capacitors comprising non-stoichiometric lead magnesium niobate PbMg$_{0.35 \text{ to } 0.5}$Nb$_{0.4 \text{ to } 0.8}$O$_3$.

According to another aspect of the present invention there is provided a dielectric composition for ceramic capacitors comprising non-stoichiometric lead magnesium niobate PbMg$_{0.35 \text{ to } 0.5}$Nb$_{0.4 \text{ to } 0.8}$O$_3$ and one or more oxide additives.

According to a further aspect of the present invention there is provided a dielectric composition for ceramic capacitors comprising non-stoichiometric lead magnesium niobate PbMg$_{0.35 \text{ to } 0.5}$Nb$_{0.4 \text{ to } 0.8}$O$_3$ and one or more additives comprising other relaxor materials added at up to the order of the 10 wt% level to the lead magnesium niobate.

Whereas the dielectric composition disclosed in the above mentioned Patent Specification Serial No. 2107300B is based on non-stoichiometric lead magnesium niobate, which was referred to therein as PbMg$_{1/2}$Nb$_{1/2}$O$_3$, with various additives, we have only just appreciated that the non-stoichiometric lead magnesium niobate (LMN) on its own has properties which mean that it is suitable as a low firing temperature ceramic dielectric for ceramic capacitors, that is it has a high dielectric constant, at both 20 and 25°C, with a low tan $\delta$ (see Table 1). The temperature coefficient of capacitance is just outside the Z5U band, although it can come within the Y5V requirement, when fired under certain conditions, that between -30 and +85°C the capacitance variation is within the band +22% to -82% of the 25°C value. The face that non-stoichiometric LMN is usable on its own is surprising since the usual stoichiometric LMN ( PbMg$_{1/3}$Nb$_{2/3}$O$_3$) is far from suitable alone. For example, the dielectric constant of stoichometric LMN is quoted as 5700 at 25°C, following firing at 1080°C, in U.S. Patent Specification No. 4339544. The dielectic constant of the non-stoichiometric LMN is quoted in the following Table 1 as 9860 at 25°C following firing at 980°C. The non-stoichiometric LMN material used to obtain the results quoted in the above-mentioned GB Patent Specification was actually PbMg$_{0.443}$Nb$_{0.5001}$O$_3$ which was approximated to PbMg$_{1/2}$Nb$_{1/2}$O$_3$. Preferably the magnesium is in the range 0.4 to 0.8. Hence the expression PbMg$_{0.35 \text{ to } 0.5}$Nb$_{0.4 \text{ to } 0.8}$O$_3$.

In the following tables the results are quoted for LMN base material with the same stoichiometry, although more than one batch was used. The slightly varying figures for LMN arise because of: (a) batch-to-batch variation, in particular if batches of different sizes are produced, the variations in ball-milling conditions and furnace loading during calcining can lead to variable properties; (b) using more than one furnace to fire discs, although set to standard conditions, individual furnaces vary in the interpretation of these; (c) the ageing rate of these materials is quite high, therefore variation in time of testing (measured from time of last heating cycle) can cause considerable changes in measured properties.

When we commenced work on the relaxor dielectrics the method chosen to produce the basic non-stoichiometric LMN comprised combining all constituent base oxides, carrying out a single calcining step and then firing. The results obtained were poor due to the formation of a low K (dieletric constant) pyrochlore phase. The addition of the additive types mentioned in Specification 2107300B was found to improve the properties of the dielectrics. Subsequently the preparation route was changed (pre-reacting $PbO + Nb_2O_5$ before mixing with $MgC$ + calcining) but the use of additives was maintained. A slightly different preparation route (pre-reacting $MgO + Nb_2O_5$ followed by mixing with $PbO$ + final calcining) was used to produced the basic non-stoichiometric LMN whose results are quoted in the following table. The overall composition of the non-stoichiometric LMN is, however, unchanged as $PbMg_{0.443}Nb_{0.500}O_3$.

| | Temp.dep. of K $\Delta c$ 10-85°C ref.temp.25°C | | $K_{max}$ | $T_{K_{max}}$ | $K_{20°C}$ | $K_{25°C}$ | $\tan\delta_{20°C}$ | $\tan\delta_{25°C}$ |
|---|---|---|---|---|---|---|---|---|
| | +% | -% | K | °C | K | K | % | % |
| Non-stoichometric LMN | 23.8 | 59.0 | 13.8 | -9 to -7 | 10.6 | 9.86 | 0.3 | 0.2 |
| +0.1 wt% Bismuth zirconate | 24.25 | 60.1 | 13.0 | -10 to -9 | 9.84 | 9.14 | 1.6 | 0.7 |
| +1.0 wt% Bismuth zirconate | 20.3 | 54.5 | 10.2 | -10 | 7.79 | 7.34 | 1.0 | 0.4 |
| +10.0 wt% Bismuth zirconate | 29.7 | 34.9 | 4.95 | 2 to 3 | 4.38 | 3.71 | 13.4 | 0.4 |
| +0.1 wt% lead titanate | 22.6 | 60.25 | 13.0 | -8 to -9 | 9.75 | 9.18 | 0.5 | 0.38 |
| +1.0 wt% lead titanate | 22.75 | 60.95 | 14.3 | -2 to 1 | 11.5 | 11.0 | 0.6 | 0.4 |
| +10.0 wt% lead titanate | 112 | 53.9 | 18.6 | 55 | 6.2 | 8.8 | 4.8 | 4.8 |
| +0.1 wt% Bismuth stannate | 18.75 | 58.6 | 12.9 | -9 | 9.72 | 9.29 | 0.5 | 0.4 |
| +1.0 wt% Bismuth stannate | 16.3 | 52.9 | 9.62 | -20 | 6.81 | 6.58 | 0.5 | 0.35 |
| +10 wt% Bismuth stannate | 7.91 | 29.1 | 2.10 | <-30 | 1.68 | 1.67 | 0.35 | 0.2 |
| +0.1 wt% lead stannate | 20.4 | 59.1 | 13.1 | -9 to -8 | 9.95 | 9.42 | 0.5 | 0.5 |
| +1.0 wt% lead stannate | 20.2 | 57.5 | 12.1 | -10 | 8.77 | 8.34 | 0.4 | 0.2 |
| +10.0 wt% lead stannate | 13.3 | 44.1 | 5.76 | -30 | 3.97 | 3.84 | 0.4 | 0.3 |

TABLE 1

| | | | | | | | |
|---|---|---|---|---|---|---|---|
| +0.1 wt% lead zirconate | 21.15 | 59.7 | 14.4 | −8 to −3 | 10.9 | 10.3 | 1.0 | 0.7 |
| +1.0 wt% lead zirconate | 22.3 | 59.1 | 13.95 | −7 to −2 | 10.8 | 10.1 | 0.7 | 0.4 |
| +10 wt% lead zirconate | 11.7 | 52.8 | 11.4 | 13 to 14 | 10.9 | 10.2 | 4.2 | 1.1 |
| +0.1 wt% Magnesium plumbate | 22.85 | 60.7 | 12.8 | −8 to −7 | 9.64 | 9.03 | 0.6 | 0.4 |
| +1.0 wt% Magnesium plumbate | 21.6 | 60.35 | 12.8 | −8 | 9.65 | 9.12 | 0.5 | 0.3 |
| +10.0 wt% Magnesium plumbate | 20.55 | 58.6 | 10.3 | −8 | 8.68 | 8.16 | 0.6 | 0.45 |
| 0.1 wt% Bismuth titanate | 22.0 | 61.0 | 12.7 | −9 to −8 | 9.69 | 9.21 | 1.2 | 0.7 |
| +1.0 wt% Bismuth titanate | 22.1 | 52.3 | 10.7 | −10 | 8.49 | 7.91 | 1.3 | 0.6 |
| +10.0 wt% Bismuth titanate | 9.8 | 29.4 | 5.1 | 0 | 4.60 | 4.50 | 1.0 | 0.5 |

Table 1 continued

0 221 696

The relaxor dielectrics with complex oxide additions whose electrical parameters etc. are tabulated in Table 1 were prepared by ball milling the appropriate addition into non-stoichiometric LMN (formula $PbMg_{0.443}Nb_{0.500}O_3$), drying, pressing the dried material into discs and firing at 980°C for 2 hours. Aluminium electrodes were suitably evaporated onto a surface of the discs to enable the electrical parameters to be measured. The table gives the temperature coefficient of capacitance, the temperature dependence (%) of the dielectric constant at 10°C and 85°C with respect to that at 25°C; $K_{max}$ the maximum value of dielectric constant, $T_{Kmax}$ the temperature at which the dielectric constant is a maximum; the dielectric constant at 20°C and 25°C ($K_{20°C}$, $K_{25°C}$) and the dielectric loss ($\tan\delta$) at 20°C and 25°C. Results at 20°C are quoted since that is the reference temperature for the UK coding 2FT, which is not equivalent to Z5U or Y5V, and for which we were also interested in finding suitable materials.

| | Temp.dep. of K $\Delta$C 10-85°C ref.temp.25°C | | $K_{max}$ | $T_{K_{max}}$ | $K_{20°C}$ | $K_{25°C}$ | $\tan\delta_{20°C}$ | $\tan\delta_{25°C}$ |
| | +% | -% | K | °C | K | K | % | % |
|---|---|---|---|---|---|---|---|---|
| Non-stoichometric IMN | 23.8 | 59.0 | 13.8 | −9 to −7 | 10.6 | 9.86 | 0.3 | 0.2 |
| +0.1 wt% $SnO_2$ | 24.6 | 59.3 | 12.9 | −10 | 9.51 | 8.83 | 0.9 | 0.15 |
| +1.0 wt% $SnO_2$ | 18.6 | 51.3 | 9.93 | −20 | 7.02 | 6.64 | 0.2 | 0.15 |
| +0.1 wt% ZnO | 24.6 | 60.2 | 14.1 | −8 to −7 | 10.7 | 9.86 | 1.0 | 0.2 |
| +1.0 wt% ZnO | 22.3 | 59.6 | 14.1 | −1 to 1 | 11.5 | 10.7 | 0.4 | 0.1 |
| +0.1 wt% $WO_3$ | 23.4 | 59.8 | 13.4 | −10 to −9 | 9.89 | 9.20 | 0.6 | 0.3 |
| +1.0 wt% $WO_3$ | 23.6 | 55.8 | 10.8 | −20 | 7.47 | 6.95 | 1.0 | 0.2 |
| +0.1 wt% $ZrO_2$ | 23.95 | 59.4 | 13.2 | −9 to −7 | 10.1 | 9.44 | 0.9 | 0.4 |
| +1.0 wt% $ZrO_2$ | 22.0 | 58.45 | 13.2 | −1 to 1 | 10.9 | 10.2 | 1.8 | 0.5 |
| +0.1 wt% PbO | 22.0 | 55.7 | 12.5 | −10 to −8 | 9.81 | 9.49 | 0.6 | 0.4 |
| +1.0 wt% PbO | 24.65 | 59.6 | 13.4 | −10 to −8 | 10.1 | 9.4 | 0.5 | 0.2 |
| +0.1 wt% $MnO_2$ | 21.8 | 57.9 | 12.1 | −10 | 9.15 | 8.65 | 0.5 | 0.2 |
| +1.0 wt% $MnO_2$ | 5.90 | 37.85 | 3.92 | 4 to 6 | 3.77 | 3.66 | 2.4 | 1.0 |
| +0.1 wt% $CeO_2$ | 23.7 | 58.4 | 12.4 | −10 to −8 | 9.26 | 8.66 | 0.5 | 0.2 |
| +1.0 wt% $CeO_2$ | 22.5 | 58.15 | 12.1 | −10 to −9 | 9.01 | 8.50 | 0.5 | 0.2 |

Table 2

| | | | | | | | | |
|---|---|---|---|---|---|---|---|---|
| +0.1 wt% $TiO_2$ | | 25.8 | 62.0 | 14.3 | -10 to -4 | 10.8 | 10.3 | 1.4 | 0.7 |
| +1.0 wt% $TiO_2$ | | 6.7 | 61.7 | 17.8 | 16 to 19 | 17.6 | 16.6 | 3.7 | 2.3 |
| +0.1 wt% $Ta_2O_3$ | | 22.6 | 58.4 | 12.2 | -10 | 9.05 | 8.50 | 1.1 | 0.55 |
| +1.0 wt% $Ta_2O_3$ | | 17.2 | 47.5 | 6.35 | -30 | 4.13 | 3.97 | 0.5 | 0.2 |
| +0.1 wt% $Ga_2O_3$ | | 22.09 | 58.72 | 12.2 | -8 to -9 | 9.4 | 8.8 | 0.8 | 0.4 |
| +1.0 wt% $Ga_2O_3$ | | 22.1 | 58.0 | 12.7 | -9 | 9.6 | 9.0 | 0.65 | 0.4 |
| +0.1 wt% NiO | | 24.3 | 58.4 | 13.4 | -10 to -9 | 9.71 | 9.44 | 0.55 | 0.3 |
| +1.0 wt% NiO | * | 2.0 | 55.8 | 11.5 | -10 to -9 | 8.1 | 7.66 | 0.3 | 0.2 |
| +0.1 wt% $Cr_2O_3$ | * | 20.9 | 56.3 | 12.3 | -9 to -8 | 9.75 | 9.15 | 0.9 | 0.3 |
| +1.0 wt% $Cr_2O_3$ | * | 10.7 | 52.0 | 6.27 | 17 | 6.23 | 5.65 | 12.5 | 10.5 |
| +0.1 wt% CoO | * | 18.7 | 52.8 | 10.2 | -9 to -5 | 8.2 | 7.82 | 0.15 | 0.2 |
| +1.0 wt% CoO | | 16.51 | 54.0 | 9.20 | 1 to 7 | 8.09 | 7.81 | 1.0 | 0.6 |
| +0.1 wt% $Bi_2O_3$ | | 22.4 | 58.6 | 14.5 | -10 | 10.92 | 10.33 | 0.7 | 0.5 |
| +1.0 wt% $Bi_2O_3$ | | 22.4 | 51.3 | 9.62 | -20 | 7.02 | 6.66 | 0.95 | 0.35 |
| +0.1 wt% $Al_2O_3$ | | 25.1 | 59.5 | 13.5 | -8 to -2 | 10.1 | 9.56 | 0.85 | 0.3 |
| +1.0 wt% $Al_2O_3$ | | 27.1 | 60.2 | 11.15 | -9 to 0 | 9.07 | 8.12 | 6.85 | 2.07 |
| +0.1 wt% $Fe_2O_3$ | * | 25.7 | 56.7 | 13.6 | -4 to -2 | 10.5 | 9.74 | 0.3 | 0.3 |
| +1.0 wt% $Fe_2O_3$ | * | 19.6 | 57.4 | 14.7 | 5 to 6 | 12.9 | 12.2 | 0.3 | 0.3 |
| +0.1 wt% CuO | * | 22.7 | 57.2 | 13.5 | -9 to -8 | 10.3 | 10.2 | 0.35 | 0.3 |
| +1.0 wt% CuO | * | 19.3 | 55.6 | 12.1 | -10 | 9.29 | 8.82 | 0.3 | 0.2 |
| +0.1 wt% $InO_3$ | | 22.3 | 58.1 | 11.2 | -1 to 0 | 8.60 | 8.15 | 1.1 | 0.4 |
| +1.0 wt% $InO_3$ | | 19.4 | 53.9 | 11.2 | -4 to -2 | 9.10 | 8.65 | 1.0 | 0.5 |

Table 2 (continued)

| | Disc diameter mm | $K_{max}$ K | $\Delta c$ 10-85°C REF. 25°C | | $^T K_{max}$ °C | $^T \delta_{max}$ °C | $K_{20°C}$ K | $K_{25°C}$ K | $\tan\delta_{20}$ % | $\tan\delta_{25}$ % |
|---|---|---|---|---|---|---|---|---|---|---|
| | | | +% | -% | | | | | | |
| Non-stoichiometric IMN | 6.38 | 12.4 | 21.4 | 57.0 | -10 to -9 | < -30 | 9.55 | 8.85 | 0.2 | 0.15 |
| +1% lead iron tungstate | 6.14 | 12.4 | 36.15 | 58.1 | -6 | -20 | 9.26 | 7.79 | 0.4 | 0.35 |
| +10% lead iron tungstate | 6.17 | 11.3 | 17.35 | 54.4 | -20 | < -30 | 7.24 | 7.10 | 0.45 | 0.3 |
| +1% lead magnesium tungstate | 6.15 | 11.4 | 23.3 | 57.6 | -10 | < -30 | 8.31 | 7.74 | 0.7 | 0.35 |
| +10% lead magnesium tungstate | 6.14 | > 6.8* | 13.5 | 45.05 | < -30 | < -30 | 4.31 | 4.21 | 0.35 | 0.25 |
| +1% lead copper tungstate | 6.04 | 12.15 | 22.7 | 57.7 | -10 | < -30 | 8.00 | 8.37 | 1.55 | 1.15 |
| +10% lead copper tungstate | 6.46 | > 5.68* | 15.65 | 46.3 | < -30 | < -30 | 3.65 | 3.53 | 0.3 | 0.3 |
| +1% lead nickel niobate | 6.06 | 13.0 | 22.2 | 57.9 | -10 | < -30 | 9.52 | 9.03 | 1.1 | 0.75 |
| +10% lead nickel niobate | 6.07 | 13.0 | 21.3 | 57.0 | -20 | < -30 | 9.15 | 8.66 | 2.5 | 0.6 |
| +1% non-stoichiometric lead iron niobate | 6.07 | 13.6 | 22.05 | 59.6 | -10 | -25 | 10.1 | 9.51 | 0.45 | 0.35 |
| +10% non-stoichiometric lead iron niobate | 6.10 | 14.6 | 22.2 | 61.2 | -5 to -4 | -20 | 11.0 | 11.05 | 0.7 | 0.35 |
| +1% lead iron niobate | 6.09 | 13.1 | 23.1 | 59.7 | -10 to -8 | -20 | 9.86 | 9.21 | 0.4 | 0.2 |
| +10% lead iron niobate | 6.13 | 15.7 | 21.35 | 61.05 | -1 to 1 | -20 | 13.4 | 12.4 | 0.5 | 0.3 |

Table 3

\* Since peak K T was < lowest T measurement performed the value of max K was not determined.

| | Disc diameter mm | $K_{max}$ K | $\Delta C$ 10–85$^{\circ}$C REF. 25$^{\circ}$C | | $T_{K_{max}}$ $^{\circ}$C | $T_{\delta_{max}}$ $^{\circ}$C | $K_{20^{\circ}C}$ K | $K_{25^{\circ}C}$ K | $\tan\delta_{20}$ % | $\tan\delta_{25}$ % |
|---|---|---|---|---|---|---|---|---|---|---|
| | | | +% | -% | | | | | | |
| +1% lead cobalt nitrate | 6.11 | 11.7 | 21.3 | 50.5 | −10 to −9 | <−30 | 8.85 | 8.46 | 0.55 | 0.35 |
| +10% lead cobalt nitrate | 6.10 | 6.78 | 13.5 | 48.65 | −10 to −3 | <−30 | 5.79 | 5.605 | 0.55 | 0.4 |
| +1% lead iron tantalate | 6.10 | 14.45 | 23.9 | 59.85 | −10 to −9 | <−30 | 10.75 | 10.0 | 0.9 | 0.5 |
| +10% lead iron tantalate | 6.08 | 16.1 | 25.1 | 59.8 | −10 to −9 | <−30 | 12.1 | 11.1 | 0.6 | 0.4 |
| +1% lead manganese tungstate | 6.12 | 9.66 | 19.15 | 55.05 | −10 | <−30 | 7.41 | 6.95 | 2.8 | 0.3 |
| +10% lead manganese tungstate | 6.08 | 2.56 | 8.05 | 33.25 | −3 | −4 to 0 | 2.31 | 2.24 | 0.75 | 0.75 |
| +1% lead manganese niobate | 6.09 | 11.55 | 20.7 | 57.25 | −10 | <−30 | 8.85 | 8.27 | 0.8 | 0.55 |
| +10% lead manganese niobate | 6.18 | 4.53 | 7.0 | 40.4 | 6 | 2 to 7 | 4.32 | 4.21 | 1.2 | 0.9 |
| +1% soft calcined lead nickel niobate | 6.13 | 12.0 | 22.8 | 58.4 | −10 to −9 | <−30 | 9.51 | 9.00 | 0.6 | 0.35 |
| +10% soft calcined lead nickel niobate | 6.12 | 12.15 | 22.65 | 57.55 | −10 | <−30 | 8.61 | 8.15 | 0.45 | 0.2 |

Table 3 (continued)

0 221 696

The relaxor dielectrics with simple oxide additives whose electrical properties etc. are tabulated in Table 2 were prepared by the same method as those of Table 1, except where indicated by *, which were prepared by addition of a nitrate solution of the appropriate element to the base composition, non-stoichiometric LMN.

The results quoted in Table 2 are for addition of the appropriate single oxide to LMN. If, instead of adding these simple oxides, mixes are prepared where these elements are substituted for the Pb on the A site (of the $ABO_3$ perovskite lattice) or Mg and Nb on the B site, the appropriate site for any element being a function of ionic charge and radius, very different results can be achieved, in particular higher dielectric constant values can be obtained.

The relaxor dielectrics with relaxor additions whose measured parameters are quoted in Table 3 were manufactured by ball milling prepared relaxor addition compositions together with non-stoichiometric LMN - $(PbMg_{0.443}Nb_{0.500}O_3)$, drying, pressing into discs and firing at 980°C for two hours.

Instead of just adding a single complex oxide or a single simple oxide to the basic LMN combinations of two or more of either of them may be employed, or alternatively both a complex oxide and a simple oxide, with more than one of either them if required, may be employed to achieve required properties. Whereas our Patent specification 2107300B is concerned only with LMN and the effect of additions of relatively large quantities of one or more of lead titanate, lead stannate and lead zirconate, we have now found (Table 1) that the complex oxides bismuth titanate, bismuth zirconate, bismuth stannate, magnesium plumbate, in very small 0.1 wt%, medium 1 wt% or relatively large 10 wt%, also alter the properties of LMN. In general the addition of very small amounts (0.1 wt%) of the complex oxides does not change the electrical parameters quoted appreciably, including the temperature coefficient of capacitance which remains outside of the Z5U band. Whereas in some cases the addition of 10 wt% complex oxide acted to reduce the temperature coefficient of capacitance to within the Z5U band, it frequently affects other properties adversely, particularly reducing the dielectric constant at 20 or 25°C to unacceptable levels and increasing tan δ to unacceptable levels (2.5% being a typical maximum acceptable level). In general the addition of 1 wt% complex oxide does not adversely affect tan δ to any great extent and whilst the dielectric constant at 20 or 25°C is reduced this is not to the same extent as at the 10 wt% level and is still acceptable. In some cases the temperature coefficient of capacitance is reduced to within the Z5U band.

In the case of the addition of single simple oxides at the 0.1 or 1.0 wt% level, Table 2 only in a very few cases does tan δ become unacceptable although two simple oxides (i.e. $Cr_2O_3$ and $MnO_2$) at the 1% level reduce the dielectric constant excessively. In some cases the temperature coefficient of capacitance is reduced to within the Z5U band. The effect of $TiO_2$ in raising the dielectric constant is particularly noticeable although there are attendant increases in tan δ and the temperature coefficient of capacitance is still outside of the Z5U band.

With regard to the results quoted in Table 3 it is apparent that in general the relaxor additives act as sintering aids, the only exception being 10% lead copper tungstate, this being indicated by the reduction in disc diameter. Of particular interest are lead nickel niobate, lead iron tantalate and lead iron niobate, all of which enhance the dielectric constant at the Curie peak ($K_{max}$). The effects of varying stoichiometry of the added relaxor as indicated for lead iron niobate for which non-stoichiometric and stoichiometric results are given are also of interest, as are the effects of the extent to which the added relaxor has been calcined prior to addition, as evidenced by the results for soft calcincal lead nickel niobate (formed at 650°C) and lead nickel niobate (formed at 800°C).

The range of properties in terms of dielectric constant, temperature coefficient of capacitance and tan δ obtained from these simple additions of relaxors is extremely broad. Some compositions are Y5V, others are Z5U. It is to be expected that higher dielectric constants might be obtained from some of these formulations (a) if they were fired under different conditions or (b) if the two relaxor mixes were pre-reacted prior to firing.

Thus non-stoichiometric lead magnesium niobate on its own may be useful as a ceramic dielectric, in order to produce ceramic dielectrics suitable for use in commercial applications, however, it may be used as a precursor for ceramic dielectrics, being modified by the addition of other relaxor compounds, complex oxides or simple oxides. These additions may either by used singly or in combination. Such dielectrics are of low firing temperature and have properties suitable for use particularly in multilayer ceramic capacitors. Whereas the results quoted in the tables were for materials fired at 980°C it is considered that comparable results would be obtained with lower firing temperatures, 900°C for example, or higher temperatures 1000°C for example.

## Claims

1. A dielectric composition for use in the manufacture of ceramic capacitors comprising non-stoichiometric lead magnesium niobate $PbMg_{0.35\ to\ 0.5}\ Nb_{0.4\ to\ 0.8}O_3$.

2. A dielectric composition for ceramic capacitors comprising non-stoichiometric lead magnesium niobate $PbMg_{0.35\ to\ 0.5}\ Nb_{0.4\ to\ 0.8}\ O_3$ and one or more oxide additives.

3. A dielectric composition as claimed in claim 2 wherein the oxide additives are selected from the group consisting of stannic oxide, zinc oxide, tungsten oxide, zirconium oxide, lead oxide, manganese oxide, ceric oxide, titanium dioxide, lanthanum oxide, gallium oxide, nickel oxide, cobalt oxide, bismuth oxide, alumina, ferric oxide, cupric oxide, chromic oxide and indium oxide.

4. A dielectric composition as claimed in claim 2 or claim 3 wherein the oxide additives are added to the lead magnesium niobate at the 0.1 wt% level.

5. A dielectric composition as claimed in claim 2 or claim 3 wherein the oxide additives are added to the lead magnesium niobate at the 1 wt% level.

6. A dielectric composition as claimed in claim 2 wherein the oxide additives are selected from the group consisting of magnesium plumbate, lead zirconate, lead stannate, bismuth stannate, lead titanate, bismuth titanate and bismuth zirconate.

7. A dielectric composition as claimed in claim 6 including one of said oxide additives added at the 0.1, 1.0 or 10 wt% level to the lead magnesium niobate.

8. A dielectric composition for ceramic capacitors comprising non-stoichiometric lead magnesium niobate $PbMg_{0.35\ to\ 0.5}\ Nb_{0.4\ to\ 0.8}\ O_3$ and one or more additives comprising other relaxor materials added at up to the order of the 10 wt% level to the lead magnesium niobate.

9. A dielectric composition as claimed in claim 8 wherein the other relaxor materials are selected from the group consisting of lead iron tantalate, lead iron tungstate, lead copper tungstate, lead manganese tungstate, lead manganese niobate, lead nickel niobate, lead cobalt nitrate and lead iron niobate,

10. A dielectric composition as claimed in claim 8 or claim 9 wherein the relaxor additive is hard or soft calcined.

11. A dielectric composition as claimed in claim 8 or claim 9 wherein the relaxor additive is stoichiometric or non-stoichiometric.

12. A dielectric composition as claimed in any one of claims 8 to 11 wherein the relaxor is added at the 1 wt% level to the lead magnesium niobate.

13. A dielectric composition as claimed in any one of the preceding claims wherein the non-stoichiometric lead magnesium niobate is $PbMg_{0.443}Nb_{0.5001}O_3$.

14. A dielectric composition as claimed in any one of the preceding claims fired at a temperature in the range 900 to 1000°C.

15. A dielectric composition as claimed in any one of claims 2 to 12 or 13 and 14 as appendent to claim 2, wherein the additives comprise combinations selected from the group consisiting of simple oxides, complex oxides and relaxor materials.

16. A dielectric composition as claimed in any one of the preceding claims having Z5U temperature coefficient of capacitance, high dielectric constant, low tan $\delta$ at both 20 and 25°C and low firing temperature and in accordance with one of the examples quoted in Table 1, Table 2 or Table 3.

17. A dielectric composition for ceramic capacitors or for use in the manufacture of ceramic capacitors whose constituents are in accordance with one of the examples quoted in Table 1, Table 2 or Table 3.

18. A dielectric composition as claimed in any one of the preceding claims and wherein the basic non-stoichiometric lead magnesium niobate was prepared by pre-reacting MgO and $Nb_2O_5$, followed by mixing with PbO and subsequent calcining.

EDINBURGH WAY
HARLOW
ESSEX CM20 2SH

TELEPHONE 0279 445991
TELEX 818746 STC CG G
FACSIMILE (GP 2 + 3) 0279 34731

Our Ref: MCD/SMD/JM/J.H. Alexander 32-5          22 October 1986

European Patent Office,
Erhardstrasse 27,
D-8000 München 2,
West Germany.

EPA EPO-OEB
DG 1
Reçu:
0 3 NOV 1986

Dear Sirs,

**European Patent Application No. 86307891.1
of which STC PLC are the Applicants**

We have just realised that there are a number of clerical errors in the specification, namely:

1. Page 2, lines 21, 25 and 30, "0.8" should read "0.6".

2. Page 3, line 23, at the end of that line a phrase was omitted, namely, "range 0.35 to 0.5 and the niobium is in the..."

3. Page 3, lines 24 and 25, "0.8" should read "0.6".

4. Page 14, line 4, "calcincal" should read "calcined".

5. Page 15, lines 4, 7 and 33, "0.8 should read "0.6".

These amendments have been allowed in the basic GB Application but were accidentally omitted from the European Application.

It was intended that the expression for non-stoichiometric lead magnesium niobate should read:

$$Pb\ Mg_{0.35\ to\ 0.5}\ Nb_{0.4\ to\ 0.6}O_3$$

as in published GB Application 8405677 (GB Serial No. 2137187) which is prior art for this Application. However a clerical error in the intermediate GB Application 8502054 (European Application 85301180.7) was inadvertently included in this Application.

contd...

ACTING FOR STC PLC

REGISTERED IN ENGLAND NO 106921
REGISTERED OFFICE
10 MALTRAVERS STREET,

It is considered that the addressee of this Application (a man skilled in the art) would realise that 0.8 was too high, since anything higher than 0.67 would result in substantially higher firing temperatures, which the Applicant is specifically trying to avoid, and that from the published prior art (GB Application No. 8405677 - Serial No. 2137187) it would be immediately evident that an upper limit of 0.6 was what was intended.

Yours faithfully,

M.C. Dennis
Authorised Representative